# EUROPÄISCHE PATENTSCHRIFT

(11) **EP 0 854 677 B1**
(45) Veröffentlichungstag und Bekanntmachung des Hinweises auf die Patenterteilung: **30.06.1999**
(21) Anmeldenummer: 96928313.4
(22) Anmeldetag: 11.09.1996
(51) Int. Cl.: A22B 1/00

(54) **EINRICHTUNG ZUM BEFÖRDERN VON TIEREN**
DEVICE FOR CONVEYING ANIMALS
DISPOSITIF POUR TRANSPORTER DES ANIMAUX

(30) Priorität: 11.10.1995 CH 287195
(43) Veröffentlichungstag der Anmeldung: 29.07.1998
(73) Patentinhaber: PETER FUCHS TECHNOLOGY GROUP AG, 8452 Adlikon (CH)
(72) Erfinder: FUCHS, Peter, CH-8452 Adlikon (CH)
(74) Vertreter: Frei, Alexandra Sarah
(86) Internationale Anmeldenummer: CH9600313
(87) Internationale Veröffentlichungsnummer: WO9713412

(56) Entgegenhaltungen:
- DE-C- 3 717 132
- NL-A- 8 501 798
- US-A- 3 080 604
- US-A- 3 230 577

## Beschreibung

Die Erfindung betrifft ein Verfahren und eine Einrichtung zum Lastenfördern und im speziellen betrifft sie ein Förderverfahren mittels einer tiergerechten Fördereinrichtung, wie sie in den Patentansprüchen offenbart sind.

Mechanische Förderer mit endlosen Lastoberflächen werden für die vielfältigsten Zwecke eingesetzt und dienen unter anderem auch zum Kolonnenfördern von Lasten, wie das Gewicht von Tieren und Menschen. Solche Fördereinrichtungen können Rutschbahnen, Rollbänder, aber auch Skilifte sein.

Speziell zum Tierfördern sind Förderverfahren entwickelt worden, bei welchem Schweine, Kälber und Schafe mit den Füssen auf einem Rollband stehen und in einem Förderkanal beispielsweise zu einer Schlachtbank gefördert werden. Andere Förderverfahren verwenden Gondeln, bei denen Tiere in Gondeln stehen und in Reinigungs- oder Gasbäder getaucht werden.

So offenbart Druckschrift DE-C-3717132 ein Förderverfahren für Schlachttiere, wobei die Tiere auf einer abfallenden Betäubungsrutsche gefördert werden.

Ein Nachteil des Tierförderns mittels Rollbänder und/oder Gondeln besteht insbesondere im schwierigen Auf- und Umsteigen der Tiere auf Rollbänder und/oder in Gondeln. Die Tiere widersetzen sich einem solchen Auf- und Umsteigen. Um diesen Nachteil zu beheben, werden die Tiere beispielsweise unter Anwendung restriktiver Zuführhilfen wie Elektroschocks getrieben. Diese Fördereinrichtung eignet sich aber nicht zum unbegleiteten, automatischen Tierfördern und erlauben insbesonders kein tiergerechtes Auf- und Umsteigen der Tiere. Die Notwendigkeit der Verwendung restriktiver Zuführhilfen zeugt vom Auftreten von Stress- und Angstzuständen der Tiere bei Benutzung dieser Fördereinrichtung.

Hier setzt die Erfindung ein. Sie hat sich zum Ziel gesetzt, tiergerechte Förderverfahren und insbesondere eine Fördereinrichtung zum stress- und angstfreien Tierfördern zu schaffen. Ferner hat sich die Erfindung zum Ziel gesetzt, einen weitgehend automatisierten Betrieb, d.h. einen Betrieb ohne manuelle Tierzuführung zu ermöglichen.

Die Erfindung gemäss der Patentansprüche löst diese Aufgaben.

Die Erfindung bezweckt das Vermeiden der Ursachen von Stress- und Angstsituationen bei zu fördernden Tieren. Technische Mittel stimmen das Tierfördern auf natürliche Verhaltensmuster der Tiere ab. Genauso wie beispielsweise die Breite von Lastenförderbändern auf die Breite der zu fördernden Lasten abgestimmt ist, erfolgt das erfindungsgemässe Fördern und Übergeben der Tiere in auf die Tiergrösse und auf deren Verhaltensmuster abgestimmten Förderkanälen und Antriebseinrichtungen.

Der Transport sowie das Auf- und Umsteigen auf Rollbänder und/oder Gondeln erfolgt zwangfrei, ohne Einwirkung ängstigender oder stresserzeugender Zuführhilfen. Erfindungsgemäss werden die Tiere über Antriebseinrichtungen in Förderäume wie Rollbändern und/oder Gondeln gefördert. Die Tiere werden auf eine Plattform geführt und durch Einschwenken der Plattform wird ihnen der Boden unter den Füssen entzogen, ein Rücklaufen oder Wenden wird ihnen verunmöglicht und sie werden in Förderäume dosiert.

Die erfindungsgemässe Fördereinrichtung lässt sich vielfältig einsetzen. Die derart in Förderäume dosierten Tiere lassen sich auf Waagen oder zu Reinigungsstellen fördern, sie lassen sich zu ärztlichen Untersuchungen oder zu Impfungen etc. hin fördern, sie lassen sich aber auch zu Scherstellen für Schafe und auf Schlachtbänke für Schlachtvieh fördern.

Anhand der folgenden Figuren werden das erfindungsgemässe Verfahren und die entsprechende Einrichtung detailliert erläutert. Hierbei zeigen:
- Fig. 1: zeigt schematisch das Erfindungsprinzip.
- Fig. 2-4: zeigen eine Seitenansicht eines Teils einer bevorzugten Ausführungsform einer erfindungsgemässen Fördereinrichtung mit Dosierband und Antriebseinrichtung und der Kinematik des Einschwenkens der Plattform.
- Fig. 5: zeigt in Seitenansicht der Ausführungsform der Fördereinrichtung gemäss den Figuren 2 bis 4 ohne Kinematik der Übergabe.
- Fig. 6: zeigt in Draufsicht der Ausführungsform der Fördereinrichtung gemäss den Figuren 2 bis 5 ohne Kinematik der Übergabe.
- Fig. 7-10: zeigen in Draufsicht eines Teils einer bevorzugten Ausführungsform einer erfindungsgemässen Fördereinrichtung mit Dosierband und Antriebseinrichtung und der Kinematik des Einschwenkens einer Schwenktüre.
- Fig. 11: zeigt in Draufsicht eine Ausführungsform der Fördereinrichtung mit Präsenzdetektoren zur Detektion von auf der Plattform stehenden Tieren.

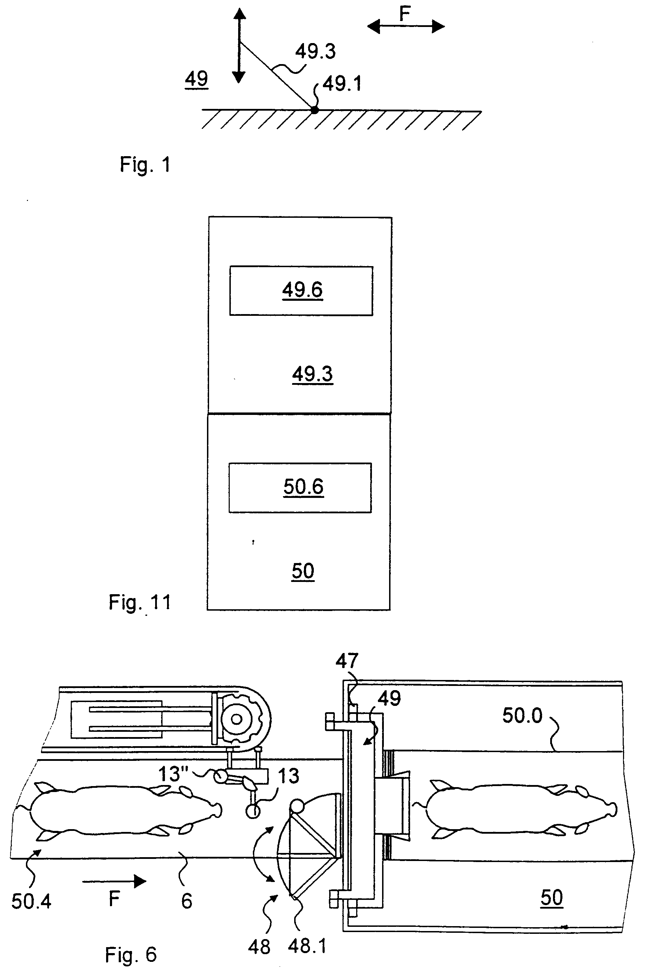

Figur 1 ist eine Schemazeichung des Erfindungsprinzipes. Die tiergerechte Fördereinrichtung verwendet eine Antriebseinrichtung 49 mit einer räumlich orientierbaren Plattform 49.3. Je nach räumlicher Ausrichtung bezüglich der Förderebene der zu fördernden Tiere bietet diese Plattform 49.3 den Tieren sicheren Halt, oder sie bietet ihnen wenig oder keinen Halt und stellt auch ein Hindernis dar. So steigen Tiere auf eine weitgehend ebene Plattform 49.3, mit einem Neigungswinkel von beispielsweise 0° zur Förderrichtung leicht auf und finden auf ihr sicheren Halt und können gut stehen. Auf eine schräge Plattform 49.3 von beispielsweise 45° zur Förderebene gemäss Figur 1, haben die Tiere wenig oder keinen Halt, sodass Tiere auf eine solche schräge Plattform 49.3 ungern aufsteigen und wenn sie auf ihr stehen, versuchen von dieser abzusteigen. Schliesslich bietet eine wandartige Plattform 49.3, mit einem Neigungswinkel von beispielsweise 90° zur Förderebene den Tieren überhaupt keinen Halt und stellt ein Hindernis dar. Die Antriebseinrichtung 49 erlaubt bei ebener Plattform 49.3 ein Aufsteigen der Tiere und bei schräger Plattform 49.3 treibt sie auf ihr stehende Tiere an.

Die Vermittlung einer Variation der Raumorientierung der Plattform 49.3 erfolgt beispielsweise über einen oder mehrere Drehpunkte, beispielsweise realisiert als ein oder mehrere Scharniere 49.1, welche eine Verbindung zwischen der Plattform 49.3 und dem Untergrund darstellen und welche einen klappenartigen oder scharnierartigen Betrieb der Antriebseinrichtung 49 ermöglichen. Je nach dem, wie sehr das einem Scharnier 49.1 entgegengesetzten, freie Ende der Plattform 49.3, um dieses Scharnier 49.1 ausgelenkt wird, ragt die die Plattform 49.3 mehr oder weniger in die Förderebene. Dieses Auslenken ist in Figur 1 durch einen senkrechten Doppelpfeil gekennzeichnet, die Förderrichtung F in der Förderebene ist durch einen waagrechten Doppelpfeil gekennzeichnet. Dem Fachmann stehen bei Kenntnis der vorliegenden Erfindung vielfältige Möglichkeiten der Realisierung solcher Ein- und auslenkmechanismen zur Verfügung. Beispielsweise steht ihm durch Verwendung von Verlängerungsplatten und weitere Scharniere die Möglichkeit der Variation der Hubbewegung der Plattform 49.3 zur Verfügung. Anhand der folgenden Figuren werden bevorzugte Realisierungen diskutiert.

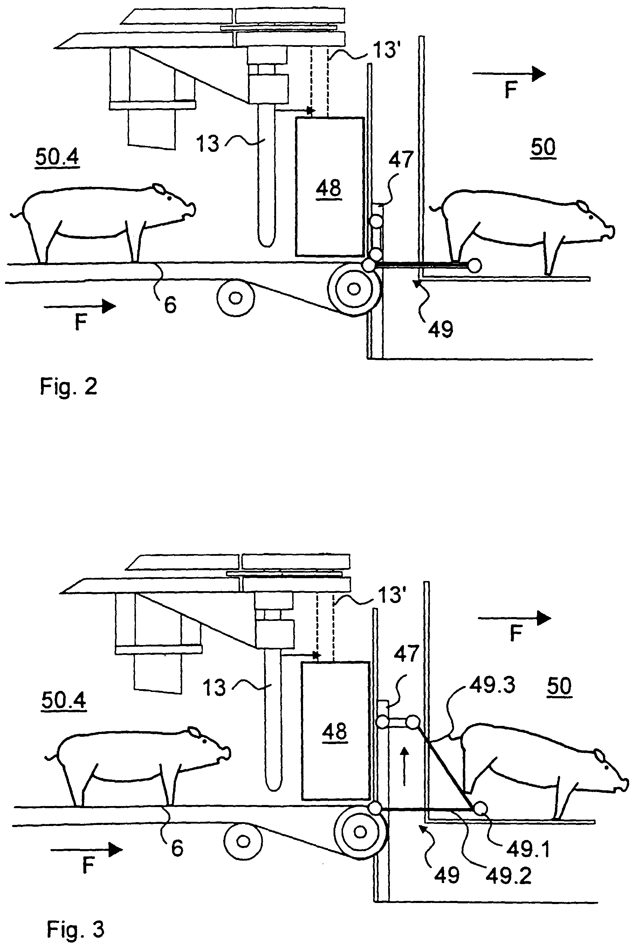

Gemäss den Figuren 2 bis 5 erfolgt ein dosiertes Kolonnenförderung von Tieren auf einem Dosierband 6. Das Fördern erfolgt vorteilhafterweise in einem verspiegelten Förderkanal 50.4 von der Schulterbreite der Tiere, wodurch ein selbständiges Kehren der Tiere, wie beispielsweise abgebildet von Schweinen, im Förderkanal 50.4 verhindert wird. Die Tierförderpfeile nahe am Dosierband 6 geben die Förderrichtung F an. Durch das Tauschen der Spiegel werden die Tiere beruhigt und abgelenkt. Einklappbare Laufsperren 13,13',13'' verhindern ein Vor- und insbesondere ein Rücklaufen der Tiere auf dem Dosierband 6 im Förderkanal 50.4. Die Tiere sind in diesen Dosierräumen voneinander isoliert und in ihrem Bewegungsraum eingeschränkt. Für weitere Details zu diesem dosierten Transport in Förderkanälen 50.4 wird auf die Anmeldung CH 03040/94-7 der Anmelderin verwiesen. Natürlich ist die erfindungsgemässe Antriebseinrichtung auch ohne ein solches Dosierband 6, beispielsweise für Tiere, die sich in einem Laufkanal befinden, zu verwenden.

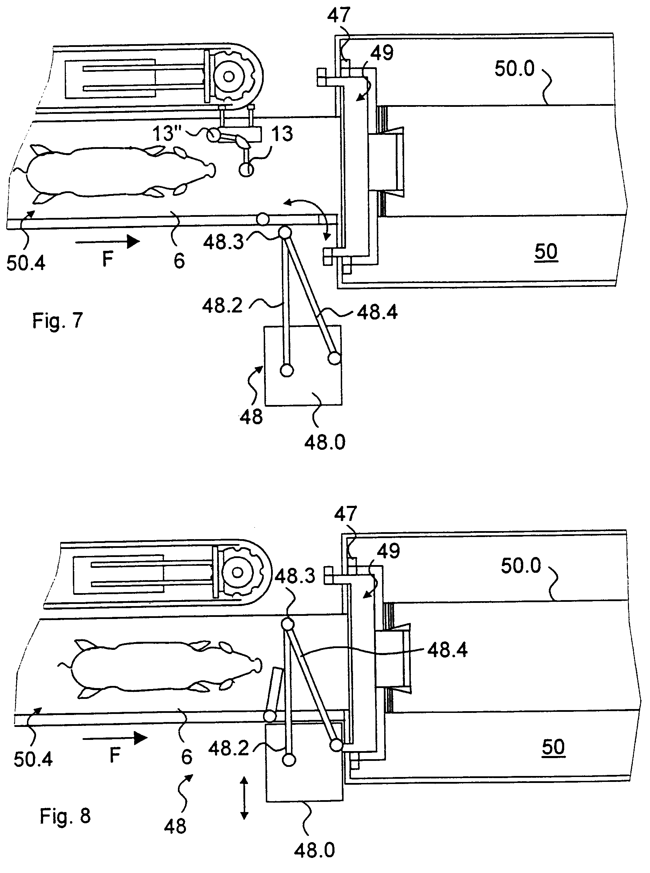

An einer Antriebseinrichtung 49 erfolgt ein Auf- und Umsteigen der dosiert geförderten Tiere in einen Förderraum 50. Dieser Förderraum 50 ist beispielsweise als Gondel 50.0 ausgebildeten Förderraum 50. Hierzu wird die Laufsperre 13,13',13'' vor jedem geförderten Tier, ähnlich einem Ausklappen bei Skiliften über eine Ausklappvorrichtung ausgeklappt, dies ist gut in der Draufsicht gemäss Figur 6 zu sehen, sodass den Tieren der Zugang zu einer am Ende des Dosierbandes 6 sich befindenden, beispielsweise vorgefahrenen Gondel 50.0 freigemacht wird. Die Ausklappvorrichtung erfolgt beispielsweise mittels Elektromotor oder druckbeschlagen und automatisch. Natürlich ist die erfindungsgemässe Antriebseinrichtung auch ohne ein solche Laufsperren 13,13',13'', beispielsweise für Tiere, die in einem Laufkanal laufen oder auf einem Laufband gefördert werden, zu verwenden.

In der Ausführungsform gemäss Figur 2 steigen die Tiere über eine Plattform 49 mit den Vorderfüssen in die Gondel 50.0, sodass sie mit den Hinterfüssen auf der Plattform 49 zu stehen kommen. Sie werden durch eine einklappende oder einschwenkende Rücklaufsperre 48 am Rücklaufen oder Kehren gehindert. Gemäss Figur 6 ist die Rücklaufsperre 48 als beispielsweise um 90° in den Förderkanal 50.4 einklappbare Drehtüre 48.1 ausgebildet (siehe gebogener Doppelpfeil). Gemäss den Figuren 7 bis 10 ist die Rücklaufsperre 48 als in den Förderkanal 50.4 einfahr- und einschwenkbare Schwenktüre 48.2 ausgebildet, die nach einem ähnlichen Mechanismus wie die Plattform 49.3 fünktioniert. Rücklaufsperren 48 in der Ausführungsform einer Drehtüre 48.1 und als Schwenktüre 48.2 lassen sich in Förderkanäle 50.4 mit und ohne Dosierbänder bzw. Laufsperren verwenden (siehe beispielsweise Figur 7 im Vergleich zu den Figuren 8 bis 10, mit und ohne Dosierbänder 6 bzw. Laufsperren 13). Die Vorteile einer einfahr- und einschwenkbaren Schwenktüre 48.2 gegenüber einer Drehtüre 48.1 bestehen darin, dass sie weniger Platz beansprucht, insbesondere dass sie beim Einfahren und Einschwenken den Platz des nächsten, nachfolgend in Kolonne geförderten Tieres wenig einschränkt und dieses Tier nicht zurückdrängt und nicht behindert.

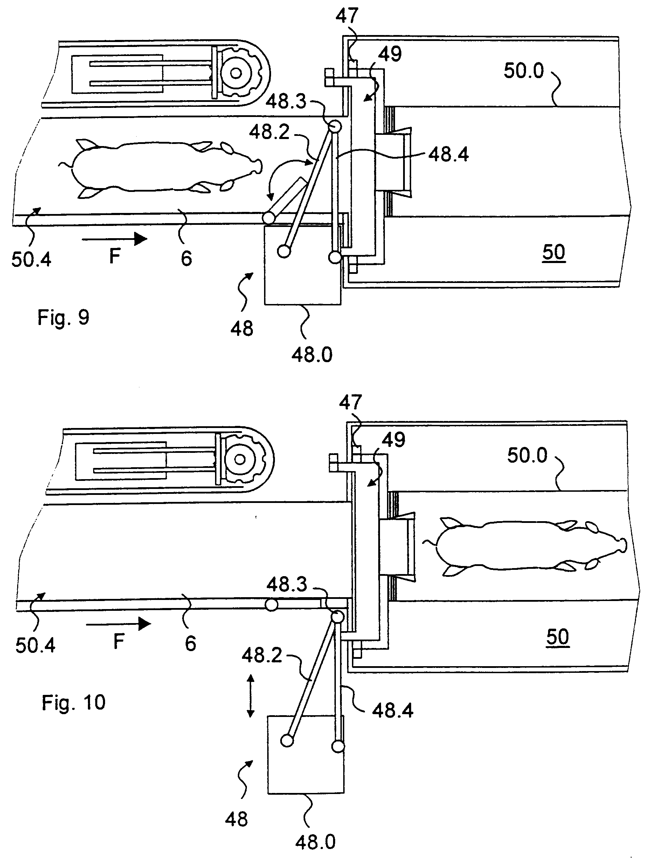

Die einschwenkbare Schwenktüre 48.2 weist vorteilhafterweise eine ein- und ausfahrbare Schiebeplatte 48.0 auf, welche schräg zur Förderrichtung F, beispielsweise in einem rechten Winkel wie durch einen Doppelpfeil gemäss der Figuren 8 und 10 angezeigt, ein- ausfahrbar ist. Die Schwenktüre 48.2 ist auf dieser Schieheplatte 48.0 montiert. Zusätzlich zum Ein- und Ausfahren der Schiebeplatte 48.0 ist die Schwenktüre 48.2 quer zur Förderrichtung F beispielsweise um ein Schwenkscharnier 48.3 gelenkig bewegbar. Diese Schwenkbewegung ist mit dem gebogenen Doppelpfeil gemäss Figur 9 angezeigt. Diese besondere Kinematik einer Einfahr- und Einschwenkbewegung gemäss den Figuren 7 bis 10 erlaubt eine Abstimmung der Rücklaufsperre 48 auf tierähnliche Verhaltensmuster. Eine erscheinende Wand stoppt ein Tier, ein sich auftuender Freiraum erlaubt dem Tier ein Vorwärtslaufen.

Gemäss Figur 7 wird die Schwenktür 48.2 auf der Schiebeplatte 48.0 in den Förderkanal 50.4 eingefahren. Dieses Einfahren der Schwenktüre 48.2 kann gleichzeitig mit dem Ausklappen der Laufsperren 13 gemäss Figur 6 erfolgen, sodass die, in Förderrichtung F gesehen, links ausklappende Laufsperre 13 gemäss Figur 6 durch eine von rechts und schräg einfahrende Schwenktüre 48.2 gemäss Figur 8 ersetzt wird. Das Tier wird somit kontinuierlich von einer Sperre am Vorwärtslaufen gehindert, zuerst beispielsweise die Laufsperre 13, dann die Schwenktüre 48.2 gemäss Figur 8 oder die Drehtüre 48.1 gemäss Figur 6. Der Unterschied dieser beiden Ausführungsformen ist der, dass die eindrehende Drehtüre 48.1, aufgrund ihres grösseren Platzbedarfes, das Tier zurückdrängt, was die einfahrende Schwenktüre 48.2 nicht tut.

Gemäss Figur 9 schwenkt die Schwenktüre 48.2 quer zur Förderrichtung F ein und eröffnet dem zu fördernden Tier einen Freiraum in Förderrichtung F. Unter optionaler Verwendung eines Dosierbandes 6, läuft die einschwenkbare Schwenktüre 48.2 bei dieser Schwenkbewegung durch Bewegen ihrer beiden Enden 48.3,48.4 quer zur Förderrichtung F mit dem Dosierband 6 mit. Dies steht im Unterschied zur Ausführungsform der Drehtüre 48.1 gemäss Figur 6, wo die ausklappende Drehtüre 48.1 entgegen der Förderrichtung F gedreht und das Tier zurückgedrängt wird. Gemäss Figur 10 wird die eingeschwenkte Schwenktüre 48.2 auf der Schiebeplatte 48.0 zurückgefahren, sodass dem Tier definitiv der Zugang zur Plattform 49.3 freigemacht wird.

Das Ein- und Ausklappen der Drehtüre 48.1 bzw. das Ein- und Ausschwenken der Schiebeplatte 48.0 und/oder Schwenktüre 48.2 erfolgen beispielsweise durch Elektromotoren oder druckbeschlagen und automatisch. Natürlich ist die erfindungsgemässe Antriebseinrichtung auch ohne ein solche Rücklaufsperren 48 verwendbar, beispielsweise für Tiere, die in einem Förderkanal mit Laufkanal laufend oder auf in einem Förderkanal auf einem Laufband nichtdosiert stehend gefördert werden.

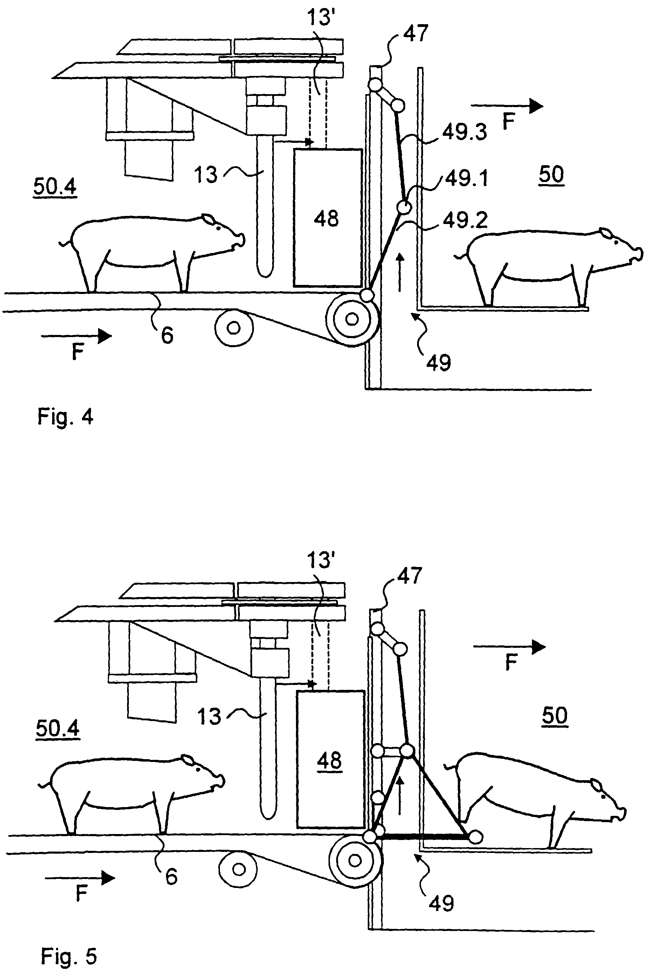

Durch Einschwenken der Plattform 49.3 wird beispielswiese den Hinterfüssen der Tiere der Boden entzogen, sodass die Tiere in die Gondel 50.0 zu gefördert werden. In der Ausführungsform gemäss den Figuren 3 und 4 erfolgt das Einschwenken der Plattform 49.3 in einer Ebene schräg oder senkrecht zur Förderrichtung F, was durch einen Einschwenkpfeil nahe der Plattform 49.3 gekennzeichnet ist. Die Antriebseinrichtung 49 weist ein Scharnier 49.1 auf, welches ein erstes Ende der Plattform 49.3 und ein erstes Ende einer Verlängerungsplatte 49.2 gelenkig miteinander verbindet. Das andere Ende der Verlängerungsplatte 49.2 ist mit dem Förderkanalboden gelenkig verbunden, das andere Ende der Plattform 49.3 ist mit einem Schieber 47 gelenkig verbunden. Das Einschwenken der Plattform 49.3 erfolgt durch Bewegen des Schiebers in Schieberichtung, umgekehrt erfolgt ein Ausschwenken der Plattform 49.3 durch Bewegen des Schiebers 47 entgegen der Schieberichtung. Der Schieber 47 wird beispielsweise durch einen handelsübliche Elektromotor oder druckbeschlagen und automatisch angetrieben. Dem Fachmann stehen bei Kenntnis der Erfindung vielfältige Möglichkeiten der Realisierungen solcher Plattformen zum Entziehen des Bodens der Füsse der geförderten Tiere zur Verfügung. Beispielsweise kann die Plattform 49.3 grösser ausgebildet sein, sodass die Tiere mit den Vorder- und Hinterfüssen auf der Plattform 49.3 zu stehen kommen. Beispielsweise kann die Plattform 49.3 mit und ohnen weiterer Verlängerungsplatten 49.2 verwendet werden. Solche weitere Verlängerungsplatten können selbst wiederum als Plattformen zum Aufsteigen für zu befördernde Tiere verwendet werden. Die Vorteile der Verwendung weiterer Verlängerungsplatten 49.2, die beispielsweise über weitere Scharniere miteinander verbunden sind, ermöglicht eine Variation der Hubbewegung der Plattform 49.3. So lassen sich fächerartige schwenkbare Antriebseinrichtungen realisieren, die verglichen mit ihrer ausgefächert ausgeschwenkten Länge, eine geringe Tiefe zum Schwenken benötigen, und die im eingefächert eingeschwenkten Zustand wenig Platz in Anspruch nehmen. Sie eignen sich für den Nacheinbau in Einrichtungen, wo wenig Einbauplatz zur Verfügung steht.

Die in den Figuren 2 bis 4 dargestellte Kinematik des Vorfahrens einer Gondel 50.0 an die Übergabestelle, des Ausklappens der Laufsperren 13,13',13'', des Einklappens der Rücklaufsperre 48 und des Einschwenkens der Plattform 49.3 sind aufeinander abgestimmt und lassen sich über Präsenzdetektoren der Antriebseinrichtung 49 auslösen. Solche Präsenzdetektoren sind beispielsweise Drucksensenoren oder Videodetektoren, welche die Präsenz geförderter Tiere im Bereich der Antriebseinrichtung 49 detektieren und mittels eines Präsenzsignales, den Antrieb automatisch in Gang setzen und ist dementsprechend automatisch steuerbar. Dem Fachmann stehen bei Kenntnis der vorliegenden Erfindung vielfältige Möglichkeiten der Realisierung solcher Präsenzdetektoren zur Verfügung. Figur 11 zeigt in Draufsicht eine Ausführungsform der Fördereinrichtung mit beispielhaften Ausführungsformen solcher Präsenzdetektoren zur Detektion von auf der Plattform stehenden Tieren. Die Präsenzdetektoren sind beispielsweise als ein oder mehrere Drucksensoren 49.6,50.6 auf der Plattform 49.3 und/oder des Förderraums 50 ausgebildet sind. Ein mittels der Antriebseinrichtung 49 zu beförderndes Tier löst diese Drucksensoren 49.6,50.6 beispielswiese beim Aufsteigen auf die Plattform durch sein Eigengewicht diese Präsenzdetektoren aus, welche daraufhin Präsenzsignale aussenden, die den automatischen Betrieb der Antriebseinrichtung starten.

## Patentansprüche

1. Verfahren zum tiergerechten Fördern in einer Förderebene mittels einer Antriebsvorrichtung (49) mit einer Plattform (49.3) zum Draufstehen der Tiere, wobei die Plattform (49.3) schwenkbar angeordnet ist, bei Belastung zur Förderung verschwenkt wird und auf ihr stehende Tiere durch Schieben in einen Förderraum (50) getrieben werden.

2. Verfahren gemäss Anspruch 1, dadurch gekennzeichnet, dass die Plattform (49.3) in Förderrichtung (F) in den Förderraum (50) geschwenkt wird.

3. Verfahren gemäss Anspruch 1, dadurch gekennzeichnet, dass die Plattform (49.3) zum Fördern in einen als Förderkanal (50.4) ausgebildeten Förderraum (50) verschwenkt wird.

4. Verfahren gemäss Anspruch 1, dadurch gekennzeichnet, dass die Plattform (49.3) zum Fördern in einen als Fördergondel (50.0) ausgebildeten Förderraum (50) geschwenkt wird.

5. Verfahren gemäss Anspruch 1, mit Förderkanäle (50.4) die zum Kolonnenfördern an die Antriebsvorrichtung (49) heranreichen, mit Dosierbändern (6) in Förderkanälen (50.4) zum Draufstehen der Tiere, mit Laufsperren (13) welche Dosierräume um Tiere voneinander abtrennen, dadurch gekennzeichnet, dass durch Ausklappen der Laufsperren (13) der - Zugang zur Antriebsvorrichtung (49) freigemacht wird.

6. Verfahren gemäss Anspruch 1, dadurch gekennzeichnet, dass eine Rücklaufsperre (48) der Antriebsvorrichtung (49) eingeklappt oder eingeschwenkt wird, sodass die eingeklappte oder eingeschwenkte Rücklaufsperre (48) ein Rücklaufen oder Wenden der Tiere verhindert.

7. Verfahren gemäss Anspruch 1, dadurch gekennzeichnet, dass das Einschwenken der Plattform (49.3) durch Präsenzsignale von Präsenzdetektoren (49.4,49.5) der Antriebsvorrichtung (49) ausgelöst wird.

8. Verfahren gemäss Anspruch 1, dadurch gekennzeichnet, dass die Plattform (49.3) verschwenkt wird, mit Tieren, welche mit allen Füssen oder nur mit den Hinterfüssen auf der Plattform (49.3) stehen.

9. Verfahren gemäss Anspruch 1, dadurch gekennzeichnet, dass die Plattform (49.3) als Wand eingeschwenkt wird, sodass die eingeschwenkte Plattform (49.3) ein Rücklaufen oder Wenden der Tiere verhindert.

10. Antriebsvorrichtung (49) zur Durchführung des Verfahrens gemäss Anspruch 1, dadurch gekennzeichnet, dass ein Ende der Plattform (49.3) mit einem Scharnier (49.1) gelenkig verbunden und ein anderes Ende der Plattform (49.3) mit einem Schieber (47) gelenkig verbunden ist, sodass die Plattform (49.3) durch Schieben des Schiebers (47) um das Scharnier (49.1) ein- und ausschwenkbar ist.

11. Antriebsvorrichtung (49) gemäss Anspruch 10, dadurch gekennzeichnet, dass die ausgeschwenkte Plattform (49.3) ebenerdig liegt, sodass die Plattform (49.3) zugänglich ist und dass die Plattform (49.3) nach Schwenken in Förderrichtung (F) als Wand ausgebildet ist, sodass auf der Plattform (49.3) stehende Tiere in den Förderraum (50) gefördert werden und die als Wand eingeschwenkte Plattform (49.3) die Tiere am Rücklauf oder Wenden hindert.

12. Antriebsvorrichtung (49) gemäss Anspruch 10, dadurch gekennzeichnet, dass als Drucksensoren ausgebildete Präsenzdetektoren (49.6,50.6) auf der Plattform (49.3) Belastung detektieren und Präsenzsignale aussenden und dass das Einschwenken der Plattform (49.3) automatisch erfolgt.

13. Antriebsvorrichtung (49) gemäss Anspruch 10, dadurch gekennzeichnet, dass der Schieber (47) über einen Elektromotor oder druckbeschlagen angetrieben ist.

14. Antriebsvorrichtung (49) gemäss Anspruch 10, dadurch gekennzeichnet, dass eine Rücklaufsperre (48) als einklappbare Klapptüre (48.1) oder als einschwenkbare Schwenktüre (48.2) ist.

15. Antriebsvorrichtung (49) gemäss Anspruch 14, dadurch gekennzeichnet, dass die einschwenkbare Schwenktüre (48.2) zusätzlich zur Schwenkbewegung schräg zur Förderrichtung (F) auf einer Schiebplatte (48.0) einfahrbar ist.

16. Antriebsvorrichtung (49) gemäss Anspruch 14, dadurch gekennzeichnet, dass die einschwenkbare Schwenktüre (48.2) bei der Schwenkbewegung durch Bewegen ihrer beiden Enden (48.3,48.4) quer zur Förderrichtung (F) mit einem Dosierband (6) mitläuft.

## Claims

1. Process for conveying animals in an appropriate manner in a conveying plane by means of a drive arrangement (49) with a platform (49.3) on which the animals stand, it being the case that the platform (49.3) is arranged in a pivotable manner, is pivoted for conveying purposes when subjected to loading, and animals standing on it are driven into a conveying space (50) by a pushing action.

2. Process according to Claim 1, characterized in that the platform (49.3) is pivoted into the conveying space (50) in the conveying direction (F).

3. Process according to Claim 1, characterized in that, for conveying purposes, the platform (49.3) is pivoted into a conveying space (50) designed as a conveying channel (50.4).

4. Process according to Claim 1, characterized in that, for conveying purposes, the platform (49.3) is pivoted into a conveying space (50) designed as a conveying cage (50.0).

5. Process according to Claim 1, having conveying channels (50.4) which extend up to the drive arrangement (49) for the purpose of conveying the animals in a line, having unit-feed belts (6) in the conveying channels (50.4), on which the animals stand, and having barriers (13) which separate from one another unit-feed spaces around the animals, characterized in that the access to the drive arrangement (49) is freed by the barriers (13) being swung out.

6. Process according to Claim 1, characterized in that a rear barrier (48) of the drive arrangement (49) is swung in or pivoted in, with the result that the swung-in or pivoted-in rear barrier (48) prevents the animals from moving back or turning.

7. Process according to Claim 1, characterized in that the pivoting-in action of the platform (49.3) is initiated by presence signals from presence detectors (49.6, 50.6) of the drive arrangement (49).

8. Process according to Claim 1, characterized in that the platform (49.3) is pivoted with animals standing with all four feet, or just their hind feet, on the platform (49.3).

9. Process according to Claim 1, characterized in that the platform (49.3) is pivoted in as a wall, with the result that the pivoted-in platform (49.3) prevents the animals from moving back or turning.

10. Drive arrangement (49) for carrying out the process according to Claim 1, characterized in that one end of the platform (49.3) is connected in an articulated manner to a hinge (49.1) and another end of the platform (49.3) is connected in an articulated manner to a slide (47), with the result that the platform (49.3) can be pivoted in and out about the hinge (49.1) by a pushing action of the slide (47).

11. Drive arrangement (49) according to Claim 10, characterized in that the pivoted-out platform (49.3) lies flat on the ground, with the result that the platform (49.3) is accessible, and in that, following pivoting in the conveying direction (F), the platform (49.3) forms a wall, with the result that animals standing on the platform (49.3) are conveyed into the conveying space (50) and the platform (49.3), which has been pivoted in as a wall, prevents the animals from moving back or turning.

12. Drive arrangement (49) according to Claim 10, characterized in that presence detectors (49.6, 50.6), which are designed as pressure sensors and are located on the platform (49.3), detect loading and emit presence signals, and in that the platform (49.3) pivots in automatically.

13. Drive arrangement (49) according to Claim 10, characterized in that the slide (47) is driven via an electric motor or by the action of pressure.

14. Drive arrangement (49) according to Claim 10, characterized in that a rear barrier (48) is designed as a swing-in door (48.1) or as a pivot-in door (48.2).

15. Drive arrangement (49) according to Claim 14, characterized in that, in addition to the pivot movement, the pivot-in door (48.2) can be moved in on a sliding plate (48.0) obliquely with respect to the conveying direction (F).

16. Drive arrangement (49) according to Claim 14, characterized in that, during the pivot movement, the pivot-in door (48.2) runs along with a unit-feed belt (6) by movement of its two ends (48.3, 48.4) transverse with respect to the conveying direction (F).

## Revendications

1. Procédé pour le transport approprié d'animaux sur un même niveau de transport au moyen d'un dispositif d'entraînement (49) composé d'une plate-forme (49.3) pour le stationnement des animaux, la plate-forme (49.3) étant pivotante avec un pivotement pour le transport en cas de charge, les animaux y stationnant étant dirigés par poussée dans un compartiment de transport (50).

2. Procédé selon la revendication 1, caractérisé en ce que la plate-forme (49.3) pivote en direction du transport (F) dans le compartiment de transport (50).

3. Procédé selon la revendication 1, caractérisé en ce que pour le transport la plate-forme (49,3) pivote dans un compartiment de transport (50) réalisé en forme de goulotte de transport (50.4).

4. Procédé selon la revendication 1, caractérisé en ce que pour le transport la plate-forme (49.3) pivote dans un compartiment de transport (50) réalisé sous forme de nacelle de transport (50.0).

5. Procédé selon la revendication 1, avec des goulottes de transport (50.4) s'étendant jusqu'au dispositif d'entraînement (49) pour un transport en colonne, avec des bandes de dosage (6) dans des goulottes de transport (50.4) pour le stationnement des animaux, avec des dispositifs d'arrêt de circulation (13) séparant les compartiments de dosage et les animaux, caractérisé en ce que l'accès au dispositif d'entraînement (49) est libéré par le basculement des dispositifs d'arrêt de circulation (13).

6. Procédé selon la revendication 1, caractérisé en ce qu'un dispositif anti-retour (48) du dispositif d'entraînement (49) bascule ou pivote, le dispositif anti-retour (48) basculé ou pivoté empêchant un retour en arrière ou un retournement des animaux.

7. Procédé selon la revendication 1, caractérisé en ce que le pivotement de la plate-forme (49.3) est déclenché par des signaux de présence provenant de détecteurs de présence (49.4,49.5) du dispositif d'entraînement (49).

8. Procédé selon la revendication 1, caractérisé en ce que la plate-forme (49.3) pivote avec des animaux stationnant avec toutes les pattes ou avec seulement les pattes arrière sur la plate-forme (49.3).

9. Procédé selon la revendication 1, caractérisé en ce que la plate-forme (49.3) pivote en tant que paroi, la plate-forme (49.3) pivotée évitant un retour en arrière ou un retournement des animaux.

10. Dispositif d'entraînement (49) pour la mise en oeuvre du procédé selon la revendication 1, caractérisé en ce qu'une extrémité de la plate-forme (49.3) fait l'objet d'une jonction articulée au moyen d'une charnière (49.1) et qu'une autre extrémité de la plate-forme (49.3) fait l'objet d'une jonction articulée au moyen d'une barre (47), la plate-forme (49.3) pouvant être pivotée dans les deux sens par un déplacement de la barre (47) autour de la charnière (49.1).

11. Dispositif d'entraînement (49) selon la revendication (10) caractérisé en ce que la plate-forme pivotée (49.3) se trouve au niveau du sol de manière à ce que la plate-forme (49.3) soit accessible et qu'après son pivotement en direction du transport (F) la plate-forme (49.3) prenne la forme d'une paroi, les animaux stationnant sur la plate-forme (49.3) étant transportés dans le compartiment de transport (50) et la plate-forme (49.3) pivotée en tant que paroi empêchant le retour en arrière ou le retournement des animaux.

12. Dispositif d'entraînement (49) selon la revendication 10, caractérisé en ce que des détecteurs de présence (49.6,50.6) conçus sous forme de détecteurs de pression détectent une charge sur la plate-forme (49.3) et émettent des signaux de présence et que le pivotement de la plate-forme (49.3) a lieu automatiquement.

13. Dispositif d'entraînement (49) selon la revendication 10, caractérisé en ce que la barre (47) est entraînée par un moteur électrique ou par application de pression.

14. Dispositif d'entrainement (49) selon la revendication 10, caractérisé en ce qu'un dispositif anti-retour (48) est une porte basculante (48.1) ou une porte pivotante (48.2).

15. Dispositif d'entraînement (49) selon la revendication 14, caractérisé en ce que la porte pivotante (48.2) peut, en plus du mouvement de pivotement, être introduite en oblique par rapport à la direction de transport (F) sur un plateau coulissant (48.0).

16. Dispositif d'entraînement (49) selon la revendication 14, caractérisé en ce que lors du mouvement de pivotement la porte pivotante (48.2) se déplace transversalement à la direction de transport (F) en même temps qu'une bande de dosage (6) par un actionnement de ses deux extrémités (48.3,48,4).
